(19) Europäisches Patentamt
European Patent Office
Office européen des brevets

(11) **EP 4 757 260 A1**

(12) **EUROPEAN PATENT APPLICATION**
published in accordance with Art. 153(4) EPC

(43) Date of publication:
**10.06.2026 Bulletin 2026/24**

(21) Application number: **23947131.1**

(22) Date of filing: **02.08.2023**

(51) International Patent Classification (IPC):
*H04L 25/49* *(2006.01)*

(52) Cooperative Patent Classification (CPC):
**H04L 25/49**

(86) International application number:
**PCT/CN2023/110855**

(87) International publication number:
**WO 2025/025183 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **LIU, Wendong**
**Dongguan, Guangdong 523860 (CN)**

(74) Representative: **Penza, Giancarlo**
**Bugnion S.p.A.**
**Viale Lancetti, 17**
**20158 Milano (IT)**

(54) **WIRELESS COMMUNICATION METHOD AND COMMUNICATION DEVICE**

(57)     Provided are a wireless communication method and a communication device. The method comprises: a transmitter transmitting a first signal, wherein the first signal is obtained by means of carrying out processing on the basis of a first model on the transmitter, and the first model is used for executing a pre-distortion operation on the first signal. In the embodiments of the present application, the first signal, which is sent by the transmitter, can be processed on the basis of the first model, wherein the first model is used for executing the pre-distortion operation. Compared with a parameter update to a traditional pre-distorter, a parameter update to a first model facilitates a reduction in the complexity of updating parameters.

```
Transmitter                          Receiver
    |                                    |
    |            S710, First signal      |
    |----------------------------------->|
    |                                    |
```

**FIG. 7**

**Description**

TECHNICAL FIELD

Embodiments of the present disclosure relate to a technical field of communications, and more particularly to, methods for wireless communication, and communication devices.

BACKGROUND

In modern communication systems, Digital Predistortion (DPD) is an extension of the analog predistortion technology. By configuring a predistorter at the front end of a power amplifier into the digital domain, and having nonlinear characteristics that are inversed to nonlinear characteristics of the power amplifier, the DPD enables a cascade module including the predistorter and the power amplifier to present a linear response. In order to improve the precision of the predistorter in the digital predistortion system, parameter(s) of the digital predistorter are required to change according to changes in an environment and an operating state. However, it is difficult to adjust the parameter of the traditional digital predistorter, which leads to the limited precision of the digital predistorter.

SUMMARY

The present disclosure provides methods for wireless communication, and communication devices. Various aspects of the present disclosure are described below.
In a first aspect, there is provided a method for wireless communication including: a transmitter transmits a first signal, where the first signal is obtained based on processing by a first model on the transmitter, and the first model is used for performing a predistortion operation on the first signal.
In a second aspect, there is provided a method for wireless communication including: a receiver receives a first signal from a transmitter; and the receiver sends feedback information of the first signal to the transmitter. Herein, the feedback information is used for updating a parameter of a first model deployed on the transmitter, and the first model is used for performing a predistortion operation on the first signal.
In a third aspect, there is provided a method for wireless communication including: a receiver receives a first signal from a transmitter; and the receiver processes the first signal based on a second model, where the second model is used for compensating for a nonlinear distortion of a power amplifier on the transmitter.
In a fourth aspect, there is provided a communication device. The communication device is a transmitter and includes a sending unit. The sending unit is configured to transmit a first signal, where the first signal is obtained based on processing by a first model on the transmitter, and the first model is used for performing a predistortion operation on the first signal.
In a fifth aspect, there is provided a communication device. The communication device is a receiver and includes a receiving unit and a sending unit. The receiving unit is configured to receive a first signal from a transmitter; and the sending unit is configured to send feedback information of the first signal to the transmitter. Herein, the feedback information is used for updating a parameter of a first model deployed on the transmitter, and the first model is used for performing a predistortion operation on the first signal.
In a sixth aspect, there is provided a communication device. The communication device is a receiver and includes a receiving unit and a processing unit. The receiving unit is configured to receive a first signal from a transmitter; and the processing unit is configured to process the first signal based on a second model, where the second model is used for compensating for a nonlinear distortion of a power amplifier on the transmitter.
In a seventh aspect, there is provided a communication device including a processor, a memory and a communication interface, where the memory is configured to store one or more computer programs, and the processor is configured to invoke the computer programs in the memory, to enable the communication device to perform a part of or all of the operations in the methods of the aforementioned aspects.
In an eighth aspect, the embodiment of the present disclosure provides a communication system including the aforementioned transmitter and/or receiver. In another possible design, the system may further include other devices that interact with the transmitter and/or receiver in the solutions provided by the embodiments of the present disclosure.
In a ninth aspect, the embodiment of the present disclosure provides a computer-readable storage medium configured to store a computer program, where the computer program causes a communication device (for example, a terminal device or a network device) to perform some of or all of the operations in the methods of the aforementioned aspects.
In a tenth aspect, the embodiment of the present disclosure provides a computer program product, where the computer program product includes a non-transitory computer-readable storage medium configured to store a computer program, and the computer program is operable to enable a communication device (for example, a terminal device or a network device) to perform some of or all of the operations in the methods of the aforementioned aspects. In some implementations, the computer program product may be a software installation package.

In an eleventh aspect, the embodiment of the present disclosure provides a chip including a memory and a processor, where the processor is configured to invoke and execute a computer program from the memory, to implement some of or all of the operations in the methods of the aforementioned aspects.

In the embodiments of the present disclosure, the first signal sent by the transmitter may be processed based on the first model, and the first model is used for performing the predistortion operation. Compared with the traditional parameter updating of the predistorter, updating the parameter of the first model helps to reduce the complexity of updating the parameter.

BRIEF DESCRIPTION OF THE DRAWINGS

FIG. 1 is a wireless communication system 100 to which an embodiment of the present disclosure is applied.
FIG. 2 is a schematic diagram of neurons to which an embodiment of the present disclosure is applied.
FIG. 3 is a schematic diagram of a neural network to which an embodiment of the present disclosure is applied.
FIG. 4 is a schematic diagram of a convolutional neural network to which an embodiment of the present disclosure is applied.
FIG. 5 is a schematic diagram of a Long Short-Term Memory (LSTM) model to which an embodiment of the present disclosure is applied.
FIG. 6 is a schematic diagram of a traditional DPD system.
FIG. 7 is a schematic flowchart of a method for wireless communication according to an embodiment of the present disclosure.
FIG. 8 is a schematic diagram of a transmitter according to an embodiment of the present disclosure.
FIG. 9 is a schematic diagram of a training process of a first model according to an embodiment of the present disclosure.
FIG. 10 is a schematic diagram of another training process of a first model according to an embodiment of the present disclosure.
FIG. 11 is a schematic diagram of a receiver according to an embodiment of the present disclosure.
FIG. 12 is a schematic diagram of a training process of a second model according to an embodiment of the present disclosure.
FIG. 13 is a schematic diagram of another training process of a second model according to an embodiment of the present disclosure.
FIG. 14 is a schematic diagram of a training process of a first model and a second model according to an embodiment of the present disclosure.
FIG. 15 is a schematic diagram of another training process of a first model and a second model according to an embodiment of the present disclosure.
FIG. 16 is a schematic diagram of a communication device according to an embodiment of the present disclosure.
FIG. 17 is a schematic diagram of another communication device according to an embodiment of the present disclosure.
FIG. 18 is a schematic diagram of another communication device according to an embodiment of the present disclosure.
FIG. 19 is a schematic structural diagram of a communication device according to an embodiment of the present disclosure.

DETAILED DESCRIPTION

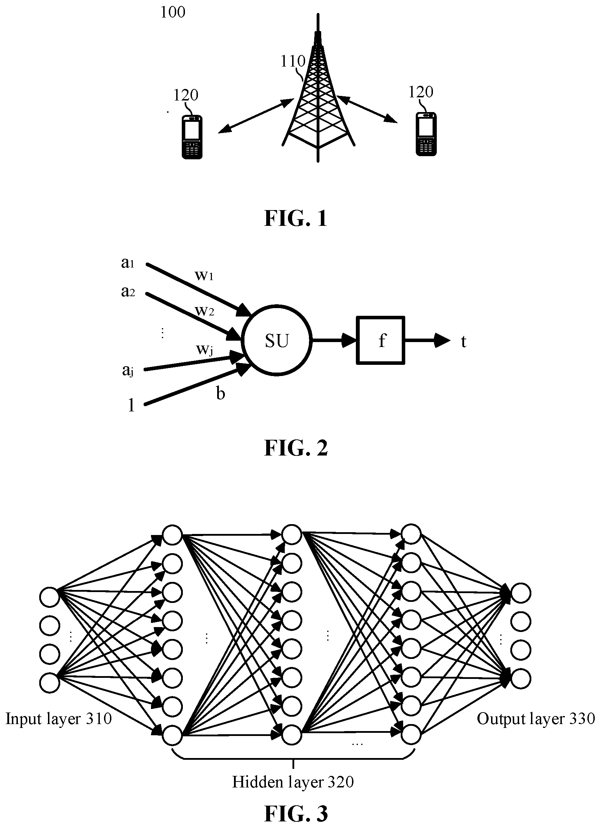

Hereinafter, technical solutions in the present disclosure are described with reference to the accompanying drawings. In order to facilitate understanding, a communication system to which the embodiments of the present disclosure are applied and related terms and communication processes will be described below with reference to FIG. 1 to FIG. 11.

FIG. 1 is a wireless communication system 100 to which an embodiment of the present disclosure is applied. The wireless communication system 100 includes a network device 110 and a terminal device 120. The network device 110 may be a device that communicates with the terminal device 120. The network device 110 may provide communication coverage for a particular geographic area and may communicate with terminal devices 120 located within the coverage.

FIG. 1 exemplarily illustrates one network device and two terminals. Optionally, the wireless communication system 100 may include multiple network devices, and other numbers of terminal devices may be included within the coverage of each network device, which is not limited by the embodiments of the present disclosure.

Optionally, the wireless communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR) system, a Long Term Evolution (LTE) system, a LTE Frequency Division Duplex (FDD) system, a LTE Time Division Duplex (TDD) system, etc. The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile station, a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used for connecting people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a Wearable Device, a Virtual Reality (VR) device, an Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used for acting as a base station. For example, the UE may act as a scheduling entity that provides sidelink signal(s) between UEs in the V2X, the D2D or the like. For example, a cellular phone communicates with a car by using the sidelink signal(s). The cellular phone communicates with the device in smart home without relaying communication signal(s) by the base station.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a Radio Access Network (RAN) node (or device) that accesses the terminal device to a wireless network. The base station may broadly cover or be replaced with following names, such as, Node B (NodeB), Evolved NodeB (eNB), next generation NodeB (gNB), relay station, access point, transmitting and receiving point (TRP), transmitting point (TP), Master eNB (MeNB), Secondary eNB (SeNB), Multi-Standard Radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node or a combination thereof. The base station may also be a communication model, a modem or a chip provided inside the device or apparatus. The base station may also be a mobile switching center and a device that undertakes a function of the base station in D2D communication, V2X communication, M2M communication, a device in network side in a 6G network, a device that undertakes a function of the base station in a future communication system, etc. The base station may support networks with the same technology or different access technologies. The specific technology and the specific device form adopted by the network device are not limited in the embodiments of the present disclosure.

The base station may be fixed or mobile. For example, a helicopter or unmanned aerial vehicle may be configured to act as a mobile base station, and one or more cells may be moved according to the location of the mobile base station. In other examples, the helicopter or unmanned aerial vehicle may be configured to function as a device that communicates with another base station.

In some deployments, the network device in the embodiment of the present disclosure may be a CU or a DU, or the network device may include a CU and a DU. The gNB may also include an AAU.

The network device and the terminal device may be deployed on land, and include indoor or outdoor device, hand-held device, or vehicle-mounted device. The network device and the terminal device may also be deployed on the water. The network device and may also be deployed in airplanes, in balloons and in satellites in the air. The scenario where the network device and the terminal device are located is not limited in the embodiment of the present disclosure.

It is also to be understood that all or part of the functions of the communication device in the present disclosure may also be implemented by software functions running on the hardware or by virtualized functions instantiated on a platform (e.g., a cloud platform).

## Neural Network (NN)

In recent years, the artificial intelligence research represented by the neural network has made great achievements in many fields, and it will also play an important role in people's production and life for a long time to come. The NN may be understood as an operation model formed by multiple neuron nodes connected with each other. The connections between nodes may represent the weighted values from the input signal(s) to the output signal(s), and are usually referred to weights. The weighted summation is performed on different input signals at each node and output is performed through a specific activation function.

With reference to FIG. 2, the neurons are able to implement the nonlinear mapping depending on the activation function. The input of the neurons may be denoted as A, and each dimension of the input is denoted as $a_j$, and the corresponding weight is denoted as $w_j$ that is used for enhancing or weakening the input together with the Summation Unit (SU). In addition, the output of the SU may be inputted into the activation function f to obtain the output t, where the values of j are 1, 2, ..., n.

Common neural networks include a Convolutional Neural Network (CNN), Recurrent Neural Network (RNN), Deep Neural Network (DNN), etc.

The neural network to which the embodiments of the present disclosure are applied will be described below with reference to FIG. 3. The neural network shown in FIG. 3 may include three categories according to locations of different layers: an input layer 310, hidden layer(s) 320, and an output layer 330. Generally, the first layer is the input layer 310, the last layer is the output layer 330, and intermediate layer(s) between the first layer and the last layer are the hidden layer(s) 320.

The input layer 310 is used for input data, and for example, the input data may be a reception signal received by a receiver. The hidden layers 320 are used for processing the input data, for example, decompressing the reception signal. The output layer 330 is used for outputting processed output data, for example, outputting a decompressed signal.

As shown in FIG. 3, the neural network includes multiple layers, each layer includes multiple neurons, and the neurons between the layers may be fully connected or partially connected. For the connected neurons, the outputs of the neurons of the preceding layer may be used as the inputs of the neurons of the later layer.

With the continuous development of the neural network research, neural network deep learning algorithms have been proposed in recent years. More hidden layers are introduced into the neural network to form the DNN and more hidden layers allow the DNN to better describe complex situations in the real world. Theoretically, the more parameters a model has, the higher its complexity and the greater its "capacity", which means that the model is able to complete more complex learning tasks. This neural network model is widely used in pattern recognition, signal processing, optimization combination, anomaly detection and so on.

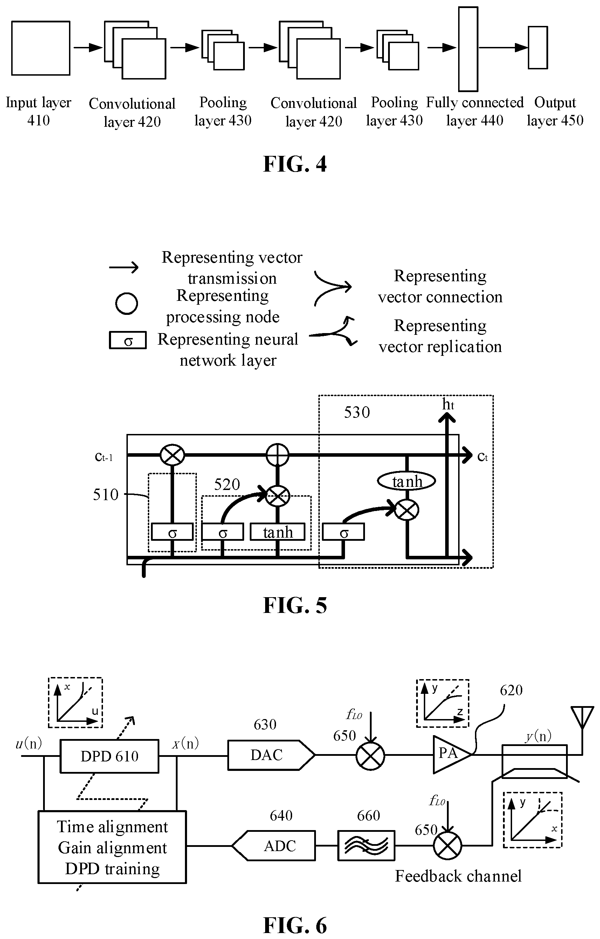

The CNN is a deep neural network with a convolutional structure, and has the structure, as shown in FIG. 4. The CNN may include an input layer 410, convolutional layers 420, a pooling layer 430, a fully connected layer 440, and an output layer 450.

Each convolution layer 420 may include multiple convolution operators, also referred to as kernels, and may function as a filter for extracting specific information from an input signal. The convolution operator may essentially be a weight matrix that is usually predefined.

The weight values in these weight matrices are obtained by preforming a lot of training in practical applications. Each weight matrix formed by the weight values obtained by the training is able to extract information from the input signal, thereby helping the CNN to predict correctly.

When the CNN has multiple convolutional layers, the initial convolutional layer often extracts more general features and the general features may also be referred to as low-level features. As the depth of the CNN deepens, the features extracted by the subsequent convolutional layers become more and more complex.

For the pooling layer 430, since it is often necessary to reduce the number of parameters that are trained, it is often necessary to periodically introduce the pooling layer after the convolutional layer. For example, one convolutional layer is followed by one pooling layer, as shown in FIG. 4, or multiple convolutional layers are followed by one or more pooling layers. In the process of the signal processing, the sole purpose of the pooling layer is to reduce the space of the extracted information.

For the fully connected layer 440, after the processing by the convolutional layers 420 and the pooling layer 430, the CNN is unable to output the required output information. As mentioned in the foregoing, the convolutional layers 420 and the pooling layer 430 only extract features and reduce parameters brought by the input data. However, in order to generate the final output information (e.g., a bitstream of raw information transmitted by the transmitter), the CNN also needs to utilize the fully connected layer 440. Generally, the fully connected layer 440 may include multiple hidden layers, and the parameters included in the multiple hidden layers may be obtained by pre-training according to related training data of a specific task type. For example, the task type may include decoding data signals received by the receiver, for another example, the task type may further include the channel estimation based on pilot signals received by the receiver.

After the multiple hidden layers in the fully connected layer 440, the last layer of the entire CNN is an output layer 450 used for outputting results. Generally, the output layer 450 is provided with a loss function (e.g., a loss function similar to the classification cross entropy) for calculating a prediction error or for evaluating a degree of difference between a result outputted by the CNN model (also known as a prediction value) and an ideal result (also known as a true value).

In order to minimize the loss function, the CNN model needs to be trained. In some implementations, the CNN model may be trained by using a Backpropagation Algorithm (BP). The training process of the BP includes a forward propagation process and a backward propagation process. In the forward propagation process (as shown in FIG. 4, the propagation from 410 to 450 is the forward propagation), the input data is inputted into the aforementioned layers of the CNN model, processed layer by layer, and sent to the output layer. If the result outputted by the output layer is quite different from the ideal result, the minimization of the aforementioned loss function is taken as the optimization goal, and the backward propagation (as shown in FIG. 4, the propagation from 450 to 410 is the backward propagation) is proceeded, and the partial derivative of the optimization goal to the weight of each neuron is calculated layer by layer to constitute the gradient of the optimization goal to the weight vector, and the gradient is used as the basis for modifying the weights of the model. The training process of the CNN is completed in the weight modification process. When the aforementioned error reaches the expected value, the training process of the CNN terminates.

It is to be noted that the CNN shown in FIG. 4 is only an example of the convolutional neural network, and in the specific applications, the convolutional neural network may also exist in the form of other network models, which is not limited in the embodiments of the present disclosure.

The purpose of the RNN is processing sequence data. In the traditional neural network model (for example, in the CNN model), from the input layer to the hidden layer to the output layer, these layers are fully connected with each other, and the nodes in each layer are unconnected with each other. But this common neural network is powerless for many problems. For example, in order to predict what the later word in a sentence will be, the preceding word is usually required to be used since in a sentence, the preceding word is not independent from the later word. The reason why the RNN is referred to as the recurrent neural network is that the current output for a sequence is also associated with the past output. The specific manifestation is that the past information is remembered by the network and is applied to the calculation of the current output. That is to say, the nodes in the hidden layer are no longer unconnected but connected, and the inputs of the hidden layer include not only the output of the input layer but also the output of the hidden layer at the previous moment. Theoretically, the RNN is capable of processing sequence data having any length.

The training of the RNN is the same as the training of the traditional Artificial Neural Network (ANN) and also use the BP error backpropagation algorithm, but has a difference with the training of the traditional ANN. If the network of the RNN is "rolled out", the parameters W, U, V are shared, which is different from the traditional neural network. Moreover, when the gradient descent algorithm is used, the output of each step depends not only on the network at the current step, but also on the state of the networks at the previous steps. For example, when t = 4, it is required to propagate backwards for three steps, and for each step, the various gradients of the previous step(s) are required to be added. This learning algorithm is referred to as backward Propagation Through Time (BPTT).

Why the recurrent neural network is required now that the artificial neural network and the convolutional neural network exist? The reason is very simple. Whether it is the convolutional neural network or the artificial neural network, their premise is that the elements are independent form each other, and the input is also independent form the output, such as a cat and a dog. But in the real world, many elements are interconnected, for example, the stocks change over time, or one person said: "I like traveling, and my favorite place is Yunnan. I must go _ _ when I have the opportunity in the future". For the blank herein that is required to be filled, everyone should know that "Yunnan" should be filled. Because the person infer it from the content of the context, but it is quite difficult for the machine to do this inference. Therefore, the current recurrent neural network is developed, and the essence of the current recurrent neural network is having the ability to remember, like a human. Therefore, the output of the recurrent neural network depends on the current input and memory.

At present, in order to solve the problem of gradient explosion or gradient disappearance of the RNN, a Long Short-Term Memory (LSTM) model is obtained by modifying on the basis of the RNN. With reference to FIG. 5, in the LSTM, a new memory unit $c_t$ (also referred to as "cell state") is introduced for performing linear cyclic information transmission while outputting information to the external state ht of the hidden layer. At each moment t, $c_t$ records history information up to the current moment. Different from the RNN where only the lasted state is considered, the memory unit may determine which states should be left behind and which states should be forgotten, which solves the shortcomings of the traditional RNN in the long-term memory.

Continuing to refer to FIG. 5, in order to implement the selection of the aforementioned state, a gate control mechanism is introduced in the memory unit to control the path of the information transmission, and the gate control mechanism is similar to the gate in the data circuit, with "0" representing closed and "1" representing open. The memory unit includes a forgetting gate 510, an input gate 520, and an output gate 530. The forgetting gate is used for controlling how much information is required to be forgotten by the memory unit $c_{t-1}$ at the previous moment; the input gate is used for controlling how much information is required to be stored by the candidate state at the current moment; and the output gate is used for controlling how much information is required to be outputted to the external state $h_t$ by the memory unit $c_t$ at the current moment.

## Power Amplifier and Predistortion Technology

A Radio Frequency (RF) Power Amplifier (PA) is one of the core devices of the transmitter, and is able to convert digital-domain signal(s) into high-power radio frequency signal(s). However, as a typical nonlinear device, the power amplifier has contradictions between the efficiency and the linearity method. On the one hand, when the power amplifier operates in the high efficiency region, the power amplifier usually produces serious nonlinear distortion, which leads to the increase of the bit error rate of the demodulated signal(s) and causes out-of-band spectrum leakage, and interferes with communication users in the adjacent channel. On the other hand, ensuring the linearity of the power amplifier means high backoff. That is to say, it is necessary to reduce the efficiency and output power of the power amplifier, which results in problems such as increased cost and poor heat dissipation of the power amplifier. Therefore, the traditional power amplifier research aims to establish a balance between the efficiency and the linearity indicator. At present, the commonly used solution is to use additional linearization technology to compensate for the nonlinear distortion of the power amplifier, to ensure that the power amplifier operates in the high efficiency region.

Traditional linearization technologies include a feedforward technology, a feedback technology, an analog predistortion, etc. The aforementioned linearization technologies all adopt the idea of compensating for the distortion of the power amplifier through the circuit design in the analog domain. The signal(s) used in the traditional communication system are mainly narrowband constant envelope signals, and the architecture of the power amplifier is mostly traditional single-tube power amplifier. These analog linearization technologies can fully meet the linearity requirements of the system. However, with the development of the wireless communication technology, the communication signal(s) gradually become wideband non-constant envelope signal(s). Considering the more complex nonlinear characteristics of the power amplifier, the traditional linearization technology of the power amplifier is facing the application bottleneck.

In the modem communication systems, DPD is the extension of the analog predistortion technology. By configuring the predistorter at the front end of the power amplifier into the digital domain, and having nonlinear characteristics that are inversed to the nonlinear characteristics of the power amplifier, the DPD enables a cascade module including the predistorter and the power amplifier to present a linear response. With reference to FIG. 6, a DPD system may include a DPD 610, a PA 620, a Digital to Analog Converter (DAC) 630, an Analog to Digital Converter (ADC) 640, an accumulator 650, and a filter 660. The accumulator 650 is configured to accumulate input data based on the parameter $f_{LO}$. The DPD 610 is located in the front end of the PA 620 and is configured to process digital signal(s). Compared with the analog predistortion technology, the digital predistortion compensation has high accuracy, large compensation bandwidth, and is able to be adapted to various power amplifiers more flexibly. Therefore, the digital predistortion compensation is considered as a very potential linearization technology of the power amplifier.

At present, the key technology of the digital predistortion generally includes the following first step to third step. The first step is the construction of parameter(s) of the digital predistorter. The core of the digital predistortion is constructing a predistorter having nonlinear characteristics inversed to the nonlinear characteristics of the power amplifier. For example, the processes of constructing the parameter of the digital predistorter may include: time alignment, gain alignment and DPD training, etc. as shown in FIG. 6. The second step is an adaptive structure and algorithm. In order to ensure the stability and precision of the digital predistorter, the parameter of the predistorter is required to change according to the changes in the environment and operating state. The error between the digital predistortion input signal and the output signal of the power amplifier is minimized by online iteration of the parameter of the DPD system. The third step is the architecture optimization. In the traditional digital predistortion system, the architecture optimization mainly aims at the unsatisfactory of the feedback channel and the cost problem. As shown in FIG. 6, the feedback channel undertakes the task of collecting nonlinear information of the power amplifier, and the characteristics of the feedback channel directly affect the precision of the predistorter.

As mentioned in the foregoing, in order to improve the precision of the predistorter in the digital predistortion system, the parameter of the digital predistorter is required to change according to the changes in the environment and operating state. However, it is difficult to adjust the parameter of the traditional digital predistorter, which leads to the limited precision of the digital predistorter. Therefore, in view of the above problems, the embodiments of the present disclosure provide a first model-based predistortion solution. Herein, the first model is used for performing a predistortion operation. In some implementations, the first model may be an AI model or a Machine Learning (ML) model. Compared with the updating of the parameter of the traditional predistorter, the updating of the parameter of the first model has the reduced complexity.

The first model being the AI model is taken as an example, the first model may also be referred to as an "AI predistortion model". The specific structure of the AI model is not limited in the embodiments of the present disclosure. For example, the first model may be one of the DNN, the CNN, and the RNN, and of course, the first model may also adopt other neural network architectures.

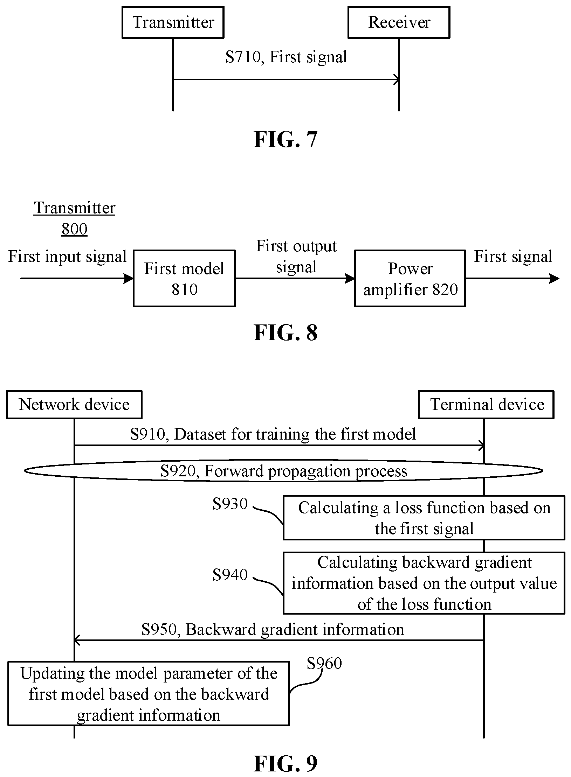

In order to facilitate understanding, the method for wireless communication according to the embodiments of the present disclosure is described below with reference to FIG. 7. With reference to FIG. 7, the method includes an operation S710. In operation S710, a transmitter transmits a first signal, where the first signal is obtained by processing based on a first model on the transmitter, and the first model is used for performing a predistortion operation on the first signal.

It is to be noted that the embodiments of the present disclosure may be applied to an uplink transmission process, i.e., the first signal is an uplink signal. In this case, the transmitter may be a terminal device, and correspondingly, the first model is deployed in the terminal device. Of course, the embodiments of the present disclosure may also be applied to a downlink transmission process, i.e., the first signal is a downlink signal. In this case, the transmitter may be a network device, and correspondingly, the first model may be deployed in the network device.

In order to facilitate understanding, by taking the first model 810 being the AI predistortion model as an example, the transmitter of the embodiments of the present disclosure is described below with reference to FIG. 8. With reference to FIG. 8, in the transmitter 800, the first model 810 may be deployed at the front end of the power amplifier 820, and if a first input signal is inputted into the first model 810, the first model 810 may output a first output signal. Accordingly, the first output signal may be used as an input to the power amplifier 820, and then the power amplifier 820 may process the first output signal and output a radio frequency signal (i.e., the first signal).

The antenna system to which the first model may be applied is not limited in the embodiments of the present disclosure. In some implementations, the first model corresponds to multiple antenna ports of the transmitter. For example, the first model may be deployed in a multi-antenna system. In this case, the input signal of the first model may include raw signals of the multiple transmit ports, and correspondingly, the input signal of the first model may include signals to be sent at the multiple transmit ports. In this case, for the multiple antenna ports, only one first model may be used in the transmitter to perform the predistortion operation on the raw signals at the multiple transmit ports, which is helpful to reduce the cost of the transmitter. Of course, in the embodiments of the present disclosure, the number of the first models deployed in the transmitter may be less than the number of the multiple transmit ports. That is to say, a certain first model in the transmitter may process raw signals of at least two transmit ports among the multiple transmit ports, which is helpful to reduce the cost of the transmitter. Of course, in the embodiments of the present disclosure, each first model in the transmitter may process a raw signal of each of the multiple transmit ports, which is helpful to reduce the complexity of the first model.

In other implementations, the first model corresponds to one antenna port of the transmitter. For example, the first model may be deployed in a single antenna system, i.e., the input signal of the first model may include only the raw signal of a single transmit port, and correspondingly, the output signal of the first model may include only the signal to be sent at the single transmit port. In this case, for multiple transmit ports, each first model in the transmitter may process the raw signal of each of the multiple transmit ports, which is helpful to reduce the complexity of the first model.

The first model in the embodiments of the present disclosure is described in the foregoing, and the input signal of the first model in the embodiments of the present disclosure is described below. In the embodiments of the present disclosure, as the input signals of the first model are different, the functions implemented by the first model are also slightly different. In some implementations, the input signal of the first model is one of: a channel-encoded bitstream; a constellation symbol; and a modulated time-domain symbol.

The input signal of the first model being the channel-encoded bitstream is taken as an example, accordingly, the first model may be used for implementing modulation, time-frequency resource mapping, and predistortion operation on the encoded bitstream. In other words, the first model is used for performing the modulation, the time-frequency resource mapping, and the predistortion operation on the input signal.

The input signal of the first model being the constellation symbol(s) is taken as an example, herein, the constellation symbol may be a constellation symbol in a constellation map. A modulation mode being the Quadrature Phase Shift Keying (QPSK) is taken as an example, the constellation symbol may be a constellation symbol in a QPSK constellation map. That is to say, the constellation symbol may be understood as a constellation symbol subjected to the modulation and the resource mapping. An orthogonal frequency division multiplexing (OFDM) system is taken as an example, constellation symbols may be frequency-domain constellation symbols arranged in a certain order on one or more time-frequency resource blocks. Accordingly, the first model may be used for performing the power allocation and predistortion operation on the one or more time-frequency resource blocks, herein, the power allocation may be understood as determining a transmit power of the first signal transmitted on the one or more time-frequency resource blocks.

The input signal of the first model being the modulated time-domain symbol(s) is taken as an example, the time-domain symbol may be a time-domain symbol modulated by a multi-carrier system or a single-carrier system. An OFDM multi-carrier system is taken as an example, the time-domain symbol is a time-domain symbol obtained after one or more time-frequency resource blocks are transformed from frequency domain to time domain by an Inverse Discrete Fourier Transformation (IDFT). For example, the input signal of the first model may include only a real part and an imaginary part of one time-domain symbol (in other words, the input signal of the first model may include only an amplitude and a phase of the one time-domain symbol). In this case, the output signal of the first model may include only the real part and the imaginary part of the time-domain symbol (in other words, the output signal of the first model may include only the amplitude and the phase of the one time-domain symbol). In this case, the first model may be understood as an inverse function for implementing the nonlinear power amplifier, to enable the first signal to restore the input signal of the first model to the greatest extent, or enable the first signal to be best matched with the input signal of the first model.

It is to be noted that the input signal of the first model including only one time-domain symbol is taken as an example to describe in the foregoing. In the embodiments of the present disclosure, the input signal of the first model may include multiple time-domain symbols. In this case, the corresponding output signal of the first model may include only real parts and imaginary parts of the multiple time-domain symbols (In other words, the output signal of the first model may include only amplitudes and phases of the multiple time-domain symbols).

The input signal of the first model in the embodiments of the present disclosure is described in the foregoing, and the training scheme of the first model in the embodiments of the present disclosure is described below. In the embodiments of the present disclosure, the training scheme of the first model may be divided into two categories, and is described below in combination with a training method 1 and a training method 2, respectively.

In the training method 1, the parameter(s) of the first model may be updated based on the first signal. That is to say, the training process of the first model may be performed based on the data at the transmitter, and therefore, such training manner may also be referred to as a "unilateral training method".

In some implementations, the parameter of the first model is updated based on a difference between the first signal and the input signal of the first model. Herein, the difference between the first signal and the input signal of the first model may be determined by a loss function. The implementation of the loss function is not limited in the embodiments of the present disclosure, and for example, the aforementioned loss function may be a Mean Squared Error (MSE) loss function. For another example, the loss function may be a cross entropy. For another example, the loss function may be a log loss.

In order to facilitate understanding, the transmitter 800 shown in FIG. 8 is taken as an example to describe. It is assumed that the input signal x of the first model includes the constellation symbol or the modulated time-domain symbol, and the first model is represented as $f(\cdot)$, then the output signal of the first model may be represented as $f(x)$. In addition, the nonlinear power amplifier is represented as $g(.)$, then the first signal (i.e. the output signal of the nonlinear power amplifier) may be represented as $g(f(x))$. Accordingly, a goal of the unilateral training at the transmitter side may be minimizing the difference between the first signal and the input signal of the first model. That is to say, the first model is intended to compensate for the nonlinearity distortion brought by the nonlinear power amplifier. Correspondingly, the unilateral training process may be represented by the following Equation 1: $f_{opt} = \arg\min_f L(\boldsymbol{x}, g(f(\boldsymbol{x})))$, herein, $f_{opt}$ represents the parameter of the first model obtained after the training and $L(\cdot)$ represents the loss function.

In the embodiments of the present disclosure, the aforementioned unilateral training process has a low implementation complexity and is not affected by the receiver. In the unilateral training process, the transmitter may collect data (for example, collect the first signal) by itself to generate the training set to perform the model training on the first model. On the other hand, when the characteristics of the nonlinear power amplifier change (for example, the characteristics of the nonlinear power amplifier change due to the change in the wireless transmission conditions), in the unilateral training process in the embodiments of the present disclosure, the first signal is also quickly collected to update the training set, and the first model is trained based on the updated training set, which is helpful to improve the matching degree between the first model and the changed characteristics of the nonlinear power amplifier.

In the training method 2, the parameter of the first model may be performed based on feedback information of the first signal fed back by the receiver.

That is to say, the method further includes: the receiver transmits feedback information of the first signal to the transmitter, and the feedback information is used for updating the parameter of the first model, or the feedback information is used for training the first model.

In some implementations, the feedback information is backward gradient information. Accordingly, the transmitter may update the parameter of the first model based on the backward gradient information. Herein, the feedback information is determined based on a difference between a first raw bit and a second raw bit. In some implementations, the difference between the first raw bit and the second raw bit may be determined by a loss function. For example, the loss function is intended to minimize the Bit Error Rate (BER) of the raw bit recovered by the receiver relative to the raw bit transmitted by the transmitter. Herein, the loss function may be any one of aforementioned loss functions, and will not be repeated herein for the sake of brevity.

If the receiver transmits the feedback information of the first signal to the transmitter, taking the receiver as the network device and the transmitter as the terminal device as an example, the backward gradient information may be transmitted through an uplink channel. The uplink channel may include a Physical Uplink Shared Channel (PUSCH) or a Physical Uplink Control Channel (PUCCH). Of course, in the embodiments of the present disclosure, the uplink channel may further include an uplink channel dedicated to the transmission of the backward gradient information. As described in the foregoing, the backward gradient information may be carried in the feedback information, and accordingly, the uplink channel dedicated to the transmission of the backward gradient information may be understood as an uplink channel dedicated to the transmission of the feedback information, and therefore, the channel may also be referred to as an "uplink feedback channel".

In some implementations, the second raw bit may be a raw bit obtained by recovering the first signal received by the receiver. For example, the second raw bit is a raw bit obtained by decoding the first signal by the receiver. The recovery method of the first signal is not limited in the embodiments of the present disclosure. For example, the recovery of the first signal may include: the channel estimation is performed based on the first signal to obtain a channel estimation result; and decoding, demodulation, and other operation are performed on the first signal based on the channel estimation result, to obtain the recovered raw bit.

In some implementations, the first raw bit is used for generating the first signal. The acquisition method of the first raw bit is not limited in the embodiments of the present disclosure. In some implementations, the first raw bit may be the first raw bit sent by the transmitter to the receiver. That is to say, before the aforementioned operation S710, the aforementioned method further includes: the transmitter sends the first raw bit to the receiver. In other implementations, the first raw bit may be the first raw bit sent by the receiver to the transmitter. That is to say, before the aforementioned operation S710, the aforementioned method further includes: the receiver sends the first raw bit to the transmitter. Of course, in the embodiments of the present disclosure, the first raw bit may be determined based on the predefined information in protocols. That is to say, the first raw bit used for determining the feedback information may be determined based on the predefined information in protocols.

If the first raw bit is the first raw bit sent by the transmitter to the receiver, taking the transmitter as the network device and the receiver as the terminal device as an example, the first raw bit may be transmitted through a downlink channel. For example, the first raw bit may be transmitted through a physical downlink shared channel (PDSCH). Of course, in the embodiments of the present disclosure, the first raw bit may be transmitted through other downlink channels. For example, the first raw bit may be transmitted through a downlink channel dedicated to the transmission of the first raw bit.

In some implementations, the first raw bits may belong to a dataset, and correspondingly, the dataset may include multiple first raw bits. In this case, multiple rounds of training may be performed on the first model based on the multiple first raw bits in the dataset, which is helpful to improve the accuracy of the first model. It is to be noted that, in some cases, if the receiver needs to determine the difference between the first raw bit and the corresponding second raw bit, the receiver also needs to acquire the dataset. Moreover, the receiver also needs to know the transmission order of the first raw bits in the dataset, in order to determine the first raw bit corresponding to the currently recovered raw bit.

The method where the receiver acquires the transmission order is not limited in the embodiments of the present disclosure. In some implementations, the aforementioned transmission order may be pre-agreed. In other implementations, the aforementioned transmission order may be indicated by the transmitter. For example, when the transmitter indicates the dataset to the receiver, the order where the multiple first raw bits in the dataset are arranged is the transmission order.

Based on the above description, it can be seen that in the embodiments of the present disclosure, the first model may be trained based on the first raw bit at the transmitter side and the second raw bit at the receiver side. Therefore, such training method may also be referred to as a "bilateral training method".

In the embodiments of the present disclosure, the first model is trained based on the bilateral training method by combining the transmitter and the receiver. The receiver-related information (for example, the type of a reception algorithm, the parameter of the receiver), the actual channel state information, and the like are considered in the training process of the first model, for improving the adaptability between the trained first model and the receiver.

On the other hand, the first model is trained based on the bilateral training method by combining the transmitter and the receiver, a feedback channel for the first signal is not required, for example, a feedback channel including the ADC, the filter, and the like shown in FIG. 6, thereby helping to reduce hardware complexity of the predistortion system.

In order to facilitate understanding, the training process in the embodiment of the present disclosure is described by taking the schematic diagram of the predistortion operation shown in FIG. 8 as an example. As shown in FIG. 8, it is assumed that the input signal of the first model 810 is determined based on the first raw bit s, accordingly, after the output signal (i.e., the first signal) of the power amplifier 820 is sent through the antenna port, the output signal may reach the receiver through the wireless channel, and the receiver may recover the received signal to obtain the recovered raw bit (also referred to "second raw bit") š. Correspondingly, the aforementioned training process of the first model may be represented based on the following Equation 2: $f_{opt} = \arg\min\limits_{f} L(\boldsymbol{s}, \tilde{\boldsymbol{s}} | \Theta_R, \sigma_n^2, \boldsymbol{h})$ , herein, $L(\cdot)$ represents the loss function, $\Theta_R$ represents a parameter set of the receiver, $\sigma_n^2$ represents a variance of noises estimated by the receiver, and $\boldsymbol{h}$ represents a parameter of the wireless channel.

It is to be noted that the parameter set of the receiver is not limited in the embodiments of the present disclosure. For example, the parameter set may include the type of the reception algorithm adopted by the receiver, and/or the value of the parameter of the receiver. For example, the type of the reception algorithm may include a channel estimation method, a signal demodulation method, and the like.

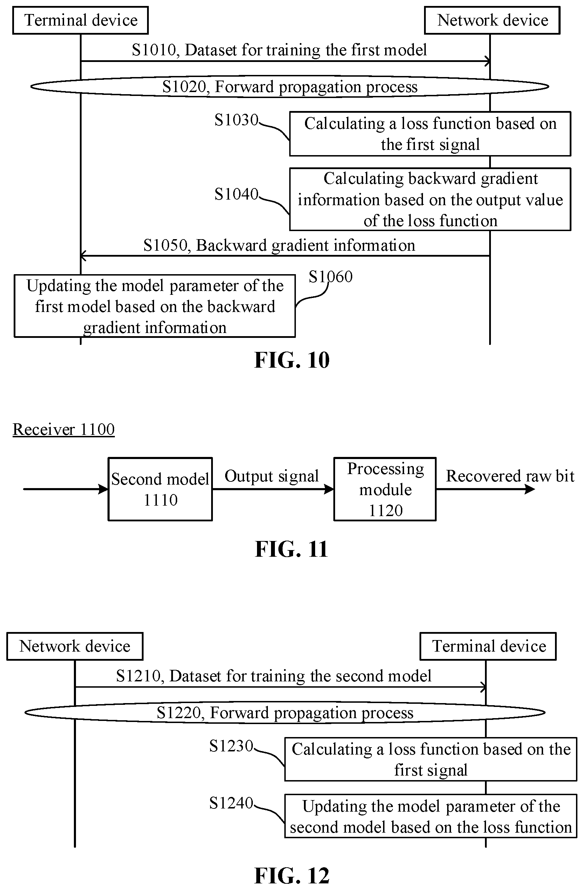

As mentioned in the foregoing, during the bilateral training process, the transmitter needs to exchange information with the receiver. In order to facilitate understanding, the training process of the first model according to the embodiments of the present disclosure is described below with reference to FIG. 9 and FIG. 10. The method shown in FIG. 9 includes operation S910 to operation S960. With reference to FIG. 9, it is assumed that in a downlink transmission scenario, the transmitter is located in a network device and the receiver is located in a terminal device.

In operation S910, the network device sends a dataset for training the first model to the terminal device.

In some implementations, the dataset includes a set of large-scale training sets and a set of small-scale validation sets. The dataset samples may include multiple raw bitstreams arranged in order, and the order may be an order where the network device sends the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels. For example, the transmission of the dataset may be performed through a downlink channel dedicated to the transmission of the dataset.

In operation S920, the forward propagation process is performed. That is to say, the first model of the network device may be loaded with initial model parameter(s), and the first signal processed by the first model may be forward propagated to the terminal device through the air interface.

In operation S930, the terminal device calculates a loss function based on the first signal.

In some implementations, the terminal device may recover the first signal to obtain the second raw bit. The second raw bit and the corresponding first raw bit in the dataset are inputted into the loss function to determine the difference between the first raw bit and the second raw bit (i.e., an output value of the loss function).

In operation S940, the terminal device calculates backward gradient information based on the output value of the loss function.

In operation S950, the terminal device sends the backward gradient information to the network device.

In some implementations, the transmission of the backward gradient information may be performed through an uplink channel, and the uplink channel may include a PUSCH or a PUCCH. Of course, in the embodiments of the present disclosure, the uplink channel may further include an uplink channel dedicated to the transmission of the backward gradient information. As described in the foregoing, the backward gradient information may be carried in the feedback information, and accordingly, the uplink channel dedicated to the transmission of the backward gradient information may be understood as an uplink channel dedicated to the transmission of the feedback information, and therefore, the channel may also be referred to as an "uplink feedback channel".

In operation S960, the network device updates the model parameter of the first model based on the backward gradient information.

It is to be noted that in the aforementioned training process of the first model, operation S920 to operation S960 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the first model reaches a preset number of iterations.

In addition, the generation of the aforementioned dataset is not specifically limited in the embodiments of the present disclosure. In some implementations, the aforementioned dataset may be generated by the network device. For example, the network device may obtain the aforementioned dataset based on several randomly generated samples. In other implementations, the samples in the dataset may be a string of raw bit sequences specified in the protocol(s). In this case, the terminal device may determine the dataset based on the predefined information, so that operation S910 is not required to be performed, which helps to reduce the transmission overhead required for the transmission of the dataset.

FIG. 10 shows another training process of a first model according to an embodiment of the present disclosure. The method shown in FIG. 10 includes operation S1010 to operation S1060. With reference to FIG. 10, it is assumed that in an uplink transmission scenario, the transmitter is located in the terminal device and the receiver is located in the network device.

In operation S1010, the network device sends a dataset for training the first model to the terminal device.

In some implementations, the dataset includes a set of large-scale training sets and a set of small-scale validation sets. The dataset samples may include multiple raw bitstreams arranged in order, and the order may be the order where the network device sends the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels. For example, the transmission of the dataset may be performed through a downlink channel dedicated to the transmission of the dataset.

In operation S1020, the forward propagation process is performed. In some implementations, the first model of the terminal device may be loaded with initial model parameter(s), and the first signal processed by the first model may be forward propagated to the network device through the air interface.

In operation S1030, the network device calculates a loss function based on the first signal.

In some implementations, the network device may recover the first signal to obtain the second raw bit. The second raw bit and the corresponding first raw bit in the dataset are inputted into the loss function to determine the difference between the first raw bit and the second raw bit (i.e., an output value of the loss function).

In operation S1040, the network device calculates backward gradient information based on the output value of the loss function.

In operation S1050, the network device sends the backward gradient information to the terminal device.

In some implementations, the transmission of the backward gradient information may be performed through an uplink channel, and the uplink channel may include a PUSCH or a PUCCH. Of course, in the embodiments of the present disclosure, the uplink channel may further include an uplink channel dedicated to the transmission of the backward gradient information. As described in the foregoing, the backward gradient information may be carried in the feedback information, and accordingly, the uplink channel dedicated to the transmission of the backward gradient information may be understood as an uplink channel dedicated to the transmission of the feedback information, and therefore, the channel may also be referred to as an "uplink feedback channel".

In operation S1060, the terminal device updates the model parameter of the first model based on the backward gradient information.

It is to be noted that in the aforementioned training process of the first model, operation S1020 to operation S1060 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the first model reaches a preset number of iterations.

In some implementations, in order to improve the generalization of the first model, the feedback information includes feedback information of multiple receivers. That is to say, the first model may be trained based on the feedback information of the multiple receivers. Of course, in the embodiments of the present disclosure, if the aforementioned problems are not considered, the feedback information may include only feedback information of one receiver, so as to reduce the complexity of training the first model.

The multiple receivers are not specifically limited in the embodiments of the present disclosure. In some implementations, the multiple receivers may be located in the same cell. The downlink transmission scenario is taken as an example, the transmitter is located in the network device and the receiver is located in the terminal device. Accordingly, the first model in the network device may be trained based on the feedback information fed back by the multiple terminal devices, to improve the generalization performance of the first model. Of course, in the embodiments of the present disclosure, the multiple receivers may be located in different cells.

In other implementations, some or all of the multiple receivers may adopt different reception algorithms, and/or have different receiver parameters, which is helpful to improve the generalization performance of the first model. Of course, in the embodiments of the present disclosure, the multiple receivers may adopt the same reception algorithm, and/or have the same receiver parameters, so as to simplify the training process of the first model.

In some scenarios, a transmit power for the transmitter to transmit the signal may be limited. Therefore, the parameter of the first model may be constrained by the transmit power. That is to say, the parameter of the first model may be updated based on the first power constraint information.

In some implementations, the first power constraint information includes one or more of: power constraint information of the first signal, and power constraint information of the output signal of the first model.

In some implementations, the first power constraint information is used for limiting one or more of: an average power of the first signal; a total power of the first signal; an average power of the output signal of the first model; and a total power of the output signal of the first model.

In the embodiments of the present disclosure, the first power constraint information may be combined with the loss function used for updating the first model. In order to facilitate understanding, the combination of the first power constraint information and the loss function represented by Equation 1 is taken as an example to describe.

It is assumed that the power value of the output signal of the first model is represented as $p(f(\boldsymbol{x}))$, the power value of the first signal is represented as $p(g(f(\boldsymbol{x})))$. Accordingly, the training process of the first model may be represented as:

$$f_{opt} = \arg\min_{f} L\left(\boldsymbol{x}, g\left(f(\boldsymbol{x})\right)\right) + \lambda_1 p(f(\boldsymbol{x})) + \lambda_2 p(g(f(\boldsymbol{x})))$$ , herein, $\lambda_1$ is a constraint coefficient for the power value of the output signal of the first model; and $\lambda_2$ is a constraint coefficient for the power value of the first signal. It is to be understood that other parameters in the aforementioned Equation may refer to the description of Equation 1, and will not be described herein for the sake of brevity.

It is to be noted that the aforementioned first power constraint information may be used in combination with the loss function represented by Equation 2, and the related principle is similar to that of the aforementioned loss function represented by Equation 1, and will not be described herein for the sake of brevity.

The first model for performing the predistortion operation in the embodiments of the present disclosure is described in the foregoing, and the model, also referred to as the second model, for compensating for the nonlinear distortion of the power amplifier on the transmitter in the embodiments of the present disclosure is described below. In some implementations, the second model may be located at the receiver. That is to say, after the aforementioned operation S710, the method further includes: the receiver processes the first signal based on the second model, and the second model is used for compensating for the nonlinear distortion of the power amplifier on the transmitter.

The aforementioned second model is not limited in the embodiments of present disclosure. The second model may be the AI model or the ML model. The second model being the AI model is taken as an example, the second model may also be referred to as an "AI distortion compensation model". The specific structure of the AI model is not limited in the embodiments of the present disclosure. For example, the second model may be one of the DNN, the CNN, and the RNN, and of course, the second model may also adopt other neural network architectures.

It is to be noted that, in the embodiments of the present disclosure, the second model may be used in combination with the first model. In this case, the first signal may be a signal processed by the first model, and the specific processing process may refer to the description in the foregoing. Of course, in the embodiments of the present disclosure, the aforementioned second model may also be used alone. In this case, the first signal is not the signal obtained by the processing by the first model.

In order to facilitate understanding, the distortion compensation solution according to the embodiments of the present disclosure is described below with reference to FIG. 11. As shown in FIG. 11, the receiver 1100 includes a second model 1110 and a processing module 1120. For the first signal, the second model is used for compensating for the nonlinear distortion of the power amplifier on the transmitter, and the processing module 1120 is configured to recover the signal to obtain the recovered raw bit. Herein, the recovery of the signal may include: the channel estimation is performed based on the signal to obtain estimated channel information, and then the demodulation and the decoding are performed on the signal based on the estimated channel information to obtain the recovered raw bit.

As shown in FIG. 11, the receiver may input the first signal into the second model 1110 to perform the nonlinear distortion compensation, so as to obtain an output signal of the second model 1110. Then, the output signal of the second model 1110 is inputted to the processing module 1120 to perform the signal recovery, so as to obtain the recovered raw bit. Herein, the first signal is a signal received by the receiver from the transmitter, and the first signal is subjected to the distortion of the nonlinear power amplifier in the transmitter.

In some implementations, the format of the input signal of the second model is the same as the format of the output signal of the second model. In this way, the output signal of the second model may be directly inputted into the next module (e.g., the processing module 1120 shown in FIG. 11) to perform the subsequent signal recovery. That is to say, the arrangement of the dimension and information of the output signal of the second model may be set to be consistent with the arrangement of the dimension and information of the output signal of the module for the signal recovery. In other words, the arrangement of the dimension and information of the input signal of the second model may be set to be consistent with the arrangement of the dimension and information of the output signal of the second module. Of course, in the embodiments of the present disclosure, if the aforementioned reasons are not considered, the input signal of the second model may have a format different from the format of the output signal.

The second model in the embodiments of the present disclosure is described in the foregoing, and the training scheme of the second model in the embodiments of the present disclosure is described below. In some implementations, the parameter of the second model may be updated based on a difference between the first raw bit and the second raw bit. In some implementations, the difference between the first raw bit and the second raw bit may be determined by a loss function. For example, the loss function is intended to minimize the BER of the raw bit recovered by the receiver relative to the raw bit transmitted by the transmitter. Herein, the loss function may be any one of aforementioned loss functions, and will not be repeated herein for the sake of brevity.

In some implementations, the second raw bit may be a raw bit obtained by recovering the first signal received by the receiver. For example, the second raw bit is a raw bit obtained by decoding the first signal by the receiver. The recovery method of the first signal is not limited in the embodiments of the present disclosure. For example, the recovery of the first signal may include: the channel estimation is performed based on the first signal to obtain a channel estimation result; and decoding, demodulation, and other operation are performed on the first signal based on the channel estimation result, to obtain the recovered raw bit.

In some implementations, the first raw bit is used for generating the first signal. The acquisition method of the first raw bit is not limited in the embodiments of the present disclosure. In some implementations, the first raw bit may be the first raw bit sent by the transmitter to the receiver. That is to say, before the aforementioned operation S710, the aforementioned method further includes: the transmitter sends the first raw bit to the receiver. In other implementations, the first raw bit may be the first raw bit sent by the receiver to the transmitter. That is to say, before the aforementioned operation S710, the aforementioned method further includes: the receiver sends the first raw bit to the transmitter. Of course, in the embodiments of the present disclosure, the first raw bit may be determined based on the predefined information in protocol(s). That is to say, the first raw bit used for determining the feedback information may be determined based on the predefined information in protocols.

In some implementations, the first raw bit may belong to a dataset, and correspondingly, the dataset may include multiple first raw bits. In this case, multiple rounds of training may be performed on the second model based on the multiple first raw bits in the dataset, which is helpful to improve the accuracy of the second model. It is to be noted that, in some cases, if the receiver needs to determine the difference between the first raw bit and the corresponding second raw bit, the receiver also needs to acquire the dataset. Moreover, the receiver also needs to know the transmission order of the first raw bits in the dataset, in order to determine the first raw bit corresponding to the currently recovered raw bit.

The method where the receiver acquires the transmission order is not limited in the embodiments of the present disclosure. In some implementations, the aforementioned transmission order may be pre-agreed. In other implementations, the aforementioned transmission order may be indicated by the transmitter. For example, when the transmitter indicates the dataset to the receiver, the order where the multiple first raw bits in the dataset are arranged is the transmission order.

Based on the aforementioned description, it can be seen that in the embodiments of the present disclosure, the second model may be trained based on the first raw bit at the transmitter side and the second raw bit at the receiver side. Although the first raw bit is required to be acquired through the transmitter, since the second model is deployed at the receiver side and a model having the parameter to be updated does not exist on the transmitter, the second model may be trained by directly adopting a unilateral training method at the receiver side. In the embodiments of the present disclosure, the second model is trained based on the unilateral training method, which is helpful to reduce the air interface overhead required for training the second model. On the other hand, the second model is trained based on the unilateral training method, which is helpful to reduce the complexity of training the second model. In another aspect, the second model is trained based on the unilateral training method, a feedback path for the first signal is not required to be set, which helps to reduce hardware complexity and is easy to implement.

It is assumed that the first raw bit sent by the transmitter is represented as s the transmitter is represented as $\theta_T(\cdot)$, the wireless channel is represented as $\boldsymbol{h}(\cdot)$, then, the first signal may be represented as $\boldsymbol{h}(\theta_T(\boldsymbol{s}))$. In addition, the second model is represented as $q(\cdot)$, the signal recovery process for the first signal is represented as $\theta_R(\cdot)$, then, the second raw bit $\tilde{\boldsymbol{s}}$ may be represented as $\theta_R(q(\boldsymbol{h}(\theta_T(\boldsymbol{s}))))$. Accordingly, the training process of the second model may be represented by the following Equation 3:

$$q_{opt} = \arg\min_q L(\boldsymbol{s}, \tilde{\boldsymbol{s}}) = \arg\min_q L(\boldsymbol{s}, \theta_R(q(\boldsymbol{h}(\theta_T(\boldsymbol{s}))))) .$$

It is to be noted that if each of $\theta_R$, $\theta_T$ and $\boldsymbol{h}$ does not include trainable parameters, then, the aforementioned training process for the second model may be obtained by the training at the receiver.

In addition, in the unilateral training method for the second model, the network device may send a dataset for training the second model to the terminal device. The dataset includes a set of first raw information bitstreams $\boldsymbol{s}$ arranged in sequence. Accordingly, the receiver may obtain the first signal in this order $\boldsymbol{h}(\theta_T(\boldsymbol{s}))$. In this case, the first signal is used as the input and the second raw bit is used as the output, and the first raw information bitstream for generating the first signal is used as the label. Accordingly, the receiver may train the second model based on the aforementioned input, output, and label.

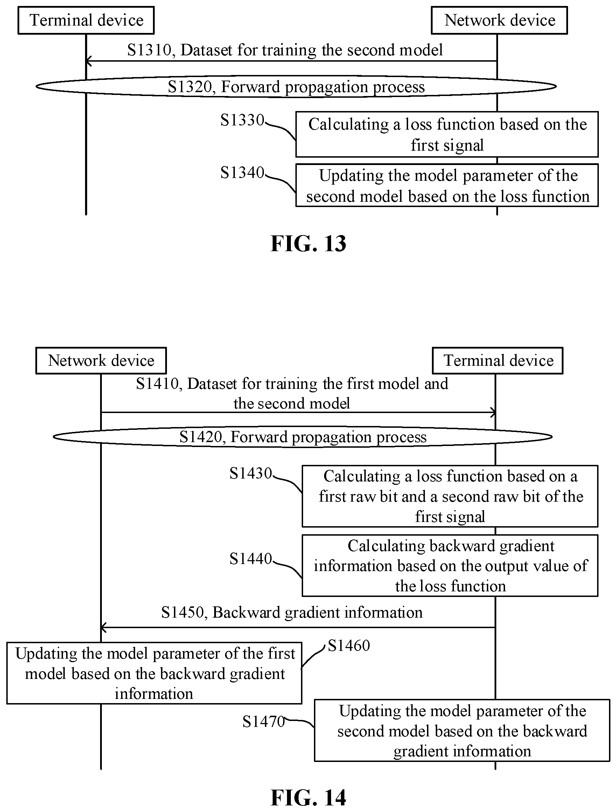

As mentioned in the foregoing, during the unilateral training process, the transmitter needs to exchange information with the receiver. In order to facilitate understanding, the training process of the second model according to the embodiments of the present disclosure is described below with reference to FIG. 12 and FIG. 13. The method shown in FIG. 12 includes operation S1210 to operation S1240. With reference to FIG. 12, it is assumed that in a downlink transmission scenario, the transmitter is located in a network device and the receiver is located in a terminal device.

In operation S1210, the network device sends a dataset for training the second model to the terminal device.

In some implementations, the dataset includes a set of large-scale training sets and a set of small-scale validation sets. The dataset samples may include multiple raw bitstreams arranged in order, and the order may be the order where the network device sends the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels. For example, the transmission of the dataset may be performed through a downlink channel dedicated to the transmission of the dataset.

In operation S1220, the forward propagation process is performed. In some implementations, the second model of the terminal device may be loaded with the initial model parameter, and the first signal that is forward propagated by the network device to the terminal device through the air interface is inputted into the second model to perform the processing.

In operation S1230, the terminal device calculates a loss function based on the first signal.

In some implementations, the terminal device may recover the first signal to obtain the second raw bit. The second raw bit and the corresponding first raw bit in the dataset are inputted into the loss function to determine the difference between the first raw bit and the second raw bit (i.e., an output value of the loss function).

In operation S1240, the terminal device updates the model parameters of the second model based on the loss function.

In some implementations, the terminal device calculates backward gradient information based on the output value of the loss function. The model parameter of the second model is updated based on the backward gradient information.

It is to be noted that in the aforementioned training process of the second model, operation S1220 to operation S1240 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the second model reaches a preset number of iterations.

In addition, the generation of the aforementioned dataset is not specifically limited in the embodiments of the present disclosure. In some implementations, the aforementioned dataset may be generated by the network device. For example, the network device may obtain the aforementioned dataset based on the several randomly generated samples. In other implementations, the samples in the dataset may be a string of raw bit sequences specified in protocols. In this case, the terminal device may determine the dataset based on the predefined information, so that operation S1210 is not required to be performed, which helps to reduce the transmission overhead required for the transmission of the dataset.

FIG. 13 shows a training process of a second model according to another embodiment of the present disclosure. The method shown in FIG. 13 includes operation S1310 to operation S1340. With reference to FIG. 13, it is assumed that in an uplink transmission scenario, the transmitter is located in the terminal device and the receiver is located in the network device.

In operation S1310, the network device sends a dataset for training the second model to the terminal device.

In some implementations, the dataset includes a set of large-scale training sets and a set of small-scale validation sets. The dataset samples may include multiple raw bitstreams arranged in order, and the order may be the order where the network device sends the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels. Of course, in the embodiments of the present disclosure, the uplink channel may further include an uplink channel dedicated to the transmission of the backward gradient information. As described in the foregoing, the backward gradient information may be carried in the feedback information, and accordingly, the uplink channel dedicated to the transmission of the backward gradient information may be understood as an uplink channel dedicated to the transmission of the feedback information, and therefore, the channel may also be referred to as an "uplink feedback channel".

In operation S1320, the forward propagation process is performed. In some implementations, the second model of the network device may be loaded with an initial model parameter, and the network device inputs the first signal that is forward propagated by the terminal device to the network device through the air interface into the second model to perform the processing.

In operation S1330, the network device calculates a loss function based on the first signal.

In some implementations, the network device may recover the first signal to obtain the second raw bit. The second raw bit and the corresponding first raw bit in the dataset are inputted into the loss function to determine the difference between the first raw bit and the second raw bit (i.e., an output value of the loss function).

In operation S1340, the network device updates the model parameter of the second model based on the loss function.

It is to be noted that in the aforementioned training process of the second model, operation S1320 to operation S1340 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the second model reaches a preset number of iterations.

In some implementations, in order to improve the generalization of the second model, the first signal may include transmit signals of multiple transmitters. That is to say, the second model may be trained based on the transmit signals of the multiple transmitters. Of course, in the embodiments of the present disclosure, if the aforementioned problems are not considered, the first signal may include only a transmit signal of one receiver, so as to reduce the complexity of training the second model.

The multiple transmitters are not specifically limited in the embodiments of the present disclosure. In some implementations, the multiple transmitters may be located in the same cell. The uplink transmission scenario is taken as an example, the transmitter is located in the terminal device and the receiver is located in the network device. Accordingly, the second model in the network device may be trained based on the transmit signals of the multiple terminal devices, to improve the generalization performance of the second model. Of course, in the embodiments of the present disclosure, the multiple transmitters may be located in different cells.

In other implementations, some or all of the multiple receivers may adopt different reception algorithms, and/or have different receiver parameters, which is helpful to improve the generalization performance of the second model. Of course, in the embodiments of the present disclosure, the multiple receivers may adopt the same reception algorithm, and/or have the same receiver parameters, so as to simplify the training process of the second model.

As mentioned in the foregoing, the first model may be used in combination with the second model. That is to say, the first model may be deployed in the transmitter, and the second model may be deployed in the receiver. In the embodiments of the present disclosure, by deploying the first model in the transmitter and the second model in the receiver respectively, it is helpful to improve the performance loss caused by the nonlinear distortion of the power amplifier and improve the link performance. In this case, the first model and the second model may be trained simultaneously by using the aforementioned bilateral training method. In some implementations, the parameter of the first model and/or the parameter of the second model may be updated based on feedback information of the first signal fed back by the receiver.

That is to say, the method further includes: the receiver sends feedback information of the first signal to the transmitter, and the feedback information is used for updating the parameter of the first model and/or the parameter of the second model, or the feedback information is used for training the first model and/or the second model.

In some implementations, the feedback information is backward gradient information. Accordingly, the transmitter may update the parameter of the first model and/or the parameter of the second model based on the backward gradient information. Herein, the feedback information is determined based on a difference between a first raw bit and a second raw bit. In some implementations, the difference between the first raw bit and the second raw bit may be determined by a loss function. For example, the loss function is intended to minimize the BER of the raw bit recovered by the receiver relative to the raw bit transmitted by the transmitter. Herein, the loss function may be any one of aforementioned loss functions, and will not be repeated herein for the sake of brevity.

In some implementations, the second raw bit may be a raw bit obtained by the receiver performing processing and recovery on the received first signal based on the second model. For example, the second raw bit is a raw bit obtained by the receiver performing the distortion compensation on the first signal based on the second model and decoding the distortion-compensated signal. The recovery method of the distortion-compensated signal is not limited in the embodiments of the present disclosure. For example, the recovery of the distortion-compensated signal may include: the channel estimation is performed based on the first signal to obtain a channel estimation result; and the decoding, the demodulation, and other operation are performed on the distortion-compensated signal based on the channel estimation result, to obtain the recovered raw bit.

In some implementations, the first raw bit is used for generating the first signal. The acquisition method of the first raw bit is not limited in the embodiments of the present disclosure. In some implementations, the first raw bit may be the first raw bit sent by the transmitter to the receiver. That is to say, before the aforementioned operation S710, the aforementioned method further includes: the transmitter sends the first raw bit to the receiver. In other implementations, the first raw bit may be the first raw bit sent by the receiver to the transmitter. That is to say, before the aforementioned operation S710, the aforementioned method further includes: the receiver sends the first raw bit to the transmitter. Of course, in the embodiments of the present disclosure, the first raw bit may be determined based on the predefined information in protocols. That is to say, the first raw bit used for determining the feedback information may be determined based on the predefined information in protocols.

In some implementations, the first raw bit may belong to a dataset, and correspondingly, the dataset may include multiple first raw bits. In this case, multiple rounds of training may be performed on the first model based on the multiple first raw bits in the dataset, which is helpful to improve the accuracy of the first model. It is to be noted that, in some cases, if the receiver needs to determine the difference between the first raw bit and the corresponding second raw bit, the receiver also needs to acquire the dataset. Moreover, the receiver also needs to know the transmission order of the first raw bits in the dataset, in order to determine the first raw bit corresponding to the currently recovered raw bit.

The method where the receiver acquires the transmission order is not limited in the embodiments of the present disclosure. In some implementations, the aforementioned transmission order may be pre-agreed. In other implementations, the aforementioned transmission order may be indicated by the transmitter. For example, when the transmitter indicates the dataset to the receiver, the order where the multiple first raw bits in the dataset are arranged is the transmission order.

Based on the above description, it can be seen that in the embodiments of the present disclosure, the first model and/or the second model may be trained based on the first raw bit at the transmitter side and the second raw bit at the receiver side. Therefore, such training method may also be referred to as a "bilateral training method".

In the embodiments of the present disclosure, the first model and/or the second model is trained based on the bilateral training method by combining the transmitter and the receiver. Since the receiver-related information (for example, the type of a reception algorithm, the parameter of the receiver), the actual channel state information, and the like are considered in the training process of the first model and/or the second model, it is helpful to improve the adaptability between the accuracy of the trained first model and/or the second model.

On the other hand, the first model and/or the second model is trained based on the bilateral training method by combining the transmitter and the receiver, a feedback channel for the first signal is not required, for example, a feedback channel including the ADC, the filter, and the like shown in FIG. 6, thereby helping to reduce hardware complexity of the predistortion system.

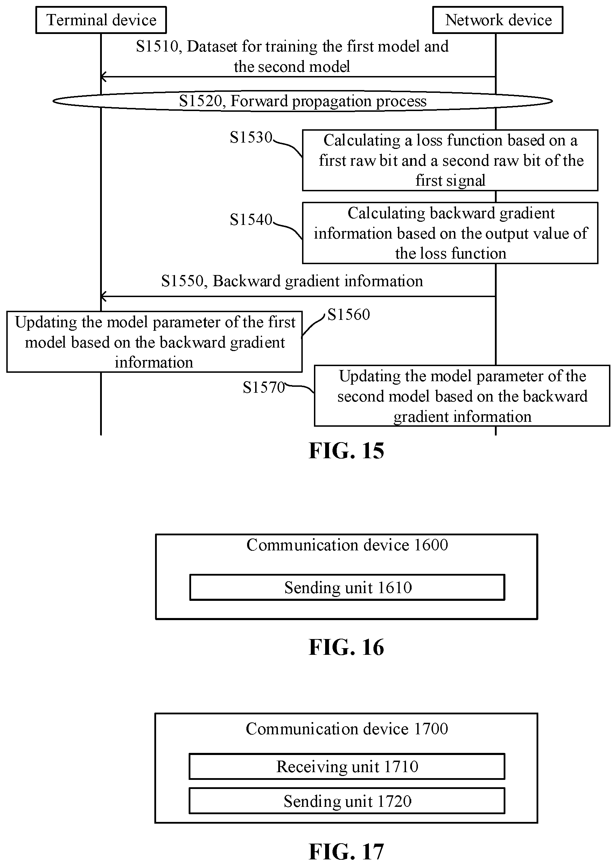

As mentioned in the foregoing, during the bilateral training process, the transmitter needs to exchange information with the receiver. In order to facilitate understanding, the training process of the first model and the second model according to the embodiments of the present disclosure is described below with reference to FIG. 14 and FIG. 15. The method shown in FIG. 14 includes operation S1410 to operation S1450. With reference to FIG. 14, it is assumed that in a downlink transmission scenario, the transmitter is located in a network device and the receiver is located in a terminal device.

In operation S1410, the network device sends a dataset for training the first model and the second model to the terminal device.

In some implementations, the dataset includes a set of large-scale training sets and a set of small-scale validation sets. The dataset samples may include multiple raw bitstreams arranged in order, and the order may be the order where the network device transmits the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels. For example, the transmission of the dataset may be performed through a downlink channel dedicated to the transmission of the dataset.

In operation S1420, the forward propagation process is performed. In some implementations, the first model of the network device and the second model of the terminal device may be loaded with respective initial model parameters; the first signal processed by the first model may be forward propagated to the terminal device through the air interface; and the terminal device performs the distortion compensation on the received signal based on the second model, to obtain the second raw bit.

In operation S1430, the terminal device calculates a loss function based on the first raw bit and the second raw bit of the first signal.

In operation S1440, the terminal device calculates backward gradient information based on the output value of the loss function.

In operation S1450, the terminal device sends the backward gradient information to the network device.

In some implementations, the transmission of the backward gradient information may be performed through an uplink channel, and the uplink channel may include a PUSCH or a PUCCH.

In operation S1460, the network device updates the model parameter of the first model based on the backward gradient information.

In operation S1470, the terminal device updates the model parameter of the second model based on the backward gradient information.

It is to be noted that in the aforementioned training process of the first model, operation S1420 to operation S1470 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the first model and the second model reaches a preset number of iterations.

In addition, the generation of the aforementioned dataset is not specifically limited in the embodiments of the present disclosure. In some implementations, the aforementioned dataset may be generated by the network device. For example, the network device may obtain the aforementioned dataset based on several randomly generated samples. In other implementations, the samples in the dataset may be a string of raw bit sequences specified in protocols. In this case, the terminal device may determine the dataset based on the predefined information, so that operation S1410 is not required to be performed, which helps to reduce the transmission overhead required for the transmission of the dataset.

FIG. 15 shows a training process of a first model according to another embodiment of the present disclosure. The method shown in FIG. 15 includes operation S1510 to operation S1560. With reference to FIG. 15, it is assumed that in an uplink transmission scenario, the transmitter is located in the terminal device and the receiver is located in the network device. Accordingly, the first model is located in the terminal device and the second model is located in the network device.

In operation S1510, the network device sends a dataset for training the first model and the second model to the terminal device.

In some implementations, the dataset includes a set of large-scale training sets and a set of small-scale validation sets. The dataset samples may include multiple raw bitstreams arranged in order, and the order may be the order where the network device transmits the raw bits in a subsequent training process.

In some implementations, the transmission of the aforementioned dataset may be performed through a downlink channel, for example, the transmission of the dataset may be performed through the PDSCH. Of course, in the embodiments of the present disclosure, the transmission of the dataset may be performed through other downlink channels.

In operation S1520, the forward propagation process is performed. In some implementations, the first model of the terminal device and the second model of the network device may be loaded with respective initial model parameters, and the first signal processed by the first model may be forward propagated to the network device through the air interface. Accordingly, the network device performs the distortion compensation and signal recovery on the received signal by using the second model to obtain the second raw bit.

In operation S1530, the network device calculates a loss function based on the first raw bit and the second raw bit of the first signal.

In operation S1540, the network device calculates backward gradient information based on the output value of the loss function.

In operation S1550, the network device sends the backward gradient information to the terminal device.

In some implementations, the transmission of the backward gradient information may be performed through an uplink channel, and the uplink channel may include a PUSCH or a PUCCH.

In operation S1560, the terminal device updates the model parameter of the first model based on the backward gradient information.

In operation S1570, the network device updates the model parameter of the second model based on the backward gradient information.

It is to be noted that in the aforementioned training process of the first model, operation S1520 to operation S1570 may be repeatedly performed until a preset condition is satisfied. The preset condition is not limited in the embodiments of the present disclosure. For example, the preset condition may include that the output value of the loss function is less than a threshold. For another example, the preset condition may include that the number of iterations of the first model reaches a preset number of iterations.

In the embodiments of the present disclosure, the generalization capabilities of the first model and the second model can be improved based on the aforementioned method, details of which may refer to the foregoing, and are not repeated herein for the sake of brevity. Of course, in the process of jointly training the first model and the second model, the parameter of the first model is updated based on the first power constraint information, details of which may refer to the foregoing.

In some scenarios, when the first model is used in combination with the second model, only the parameter of the second model may be updated. The downlink communication system is taken as an example, if a terminal device accesses a cell, the training of the first model in the network device corresponding to the cell may be completed, and in this case, only the parameter of the second model may be updated. For example, the aforementioned training method of the second model may be used for training.

The method embodiments of the present disclosure have been described in detail above with reference to FIG. 1 to FIG. 15, and the device embodiments of the present disclosure are described in detail below with reference to FIG. 16 to FIG. 19. It is to be understood that the method embodiments correspond to the device embodiments, and the portions not described in detail of the device embodiments may refer to the method embodiments.

FIG. 16 is a schematic diagram of a communication device according to an embodiment of the present disclosure. The communication device 1600 shown in FIG. 16 is a transmitter, and the communication device 1600 includes a sending unit 1610.

The sending unit 1610 is configured to transmit a first signal, where the first signal is obtained based on processing by a first model on the transmitter, and the first model is used for performing a predistortion operation on the first signal.

In some implementations, a parameter of the first model is updated based on the first signal.

In some implementations, the parameter of the first model is updated based on a difference between the first signal and an input signal of the first model.

In some implementations, the communication device further includes a first receiving unit, configured to receive feedback information of the first signal from a receiver, where the feedback information is used for updating a parameter of the first model.

In some implementations, the feedback information is backward gradient information.

In some implementations, the feedback information is determined based on a difference between a first raw bit and a second raw bit, the first raw bit is used for generating the first signal, and the second raw bit is a raw bit recovered based on the first signal.

In some implementations, the sending unit is further configured to send the first raw bit to the receiver; or, a receiving unit, configured to receive the first raw bit from the receiver.

In some implementations, the first raw bit used for determining the feedback information is determined based on predefined information in protocols.

In some implementations, the feedback information includes feedback information of multiple receivers.

In some implementations, a parameter of the first model is updated based on first power constraint information, and the first power constraint information includes one or more of: power constraint information of the first signal; and power constraint information of an output signal of the first model.

In some implementations, the first power constraint information is used for limiting one or more of: an average power of the first signal; a total power of the first signal; an average power of the output signal of the first model; and a total power of the output signal of the first model.

In some implementations, the input signal of the first model is one of: a channel-encoded bitstream; a constellation symbol; and a modulated time-domain symbol.

In some implementations, the first model corresponds to one antenna port of the transmitter; or the first model corresponds to multiple antenna ports of the transmitter.

FIG. 17 is a schematic diagram of a communication device according to another embodiment of the present disclosure. The communication device 1700 is a receiver, and includes: a receiving unit 1710 and a sending unit 1720.

The receiving unit 1710 is configured to receive a first signal from a transmitter.

The sending unit 1720 is configured to send feedback information of the first signal to the transmitter.

Herein, the feedback information is used for updating a parameter of a first model deployed on the transmitter, the first model is used for performing a predistortion operation on the first signal.

In some implementations, the feedback information is backward gradient information.

In some implementations, the feedback information is determined based on a difference between a first raw bit and a second raw bit, the first raw bit is used for generating the first signal, and the second raw bit is a raw bit recovered based on the first signal.

In some implementations, the receiving unit is configured to receive the first raw bit from the transmitter; or the sending unit is configured to send the first raw bit to the transmitter.

In some implementations, the first raw bit used for determining the feedback information is determined based on predefined information in protocols.

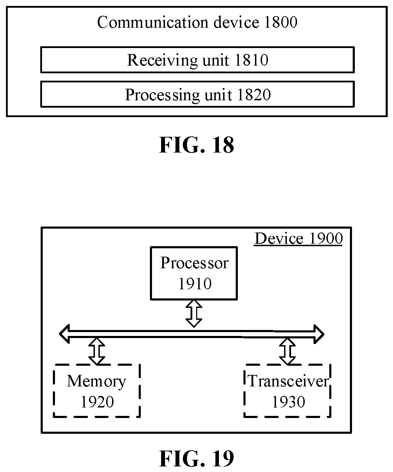

FIG. 18 is a schematic diagram of a communication device according to another embodiment of the present disclosure. The communication device 1800 shown in FIG. 18 is a receiver, and the communication device 1800 includes: a receiving unit 1810 and a processing unit 1820.

The receiving unit 1810 is configured to receive a first signal from a transmitter.

The processing unit 1820 is configured to process the first signal based on a second model, where the second model is used for compensating for a nonlinear distortion of a power amplifier on the transmitter.

In some implementations, a parameter of the second model is updated based on a difference between a first raw bit and a second raw bit, the first raw bit is used for generating the first signal, and the second raw bit is a raw bit recovered based on the first signal.

In some implementations, the receiving unit is configured to receive the first raw bit from the transmitter; or the sending unit is configured to send the first raw bit to the transmitter.

In some implementations, the first raw bit used for updating the parameter of the second model is determined based on predefined information in protocols.

In some implementations, the first signal includes transmit signals of multiple receivers.

In some implementations, a format of an input signal of the second model is the same as a format of an output signal of the second model.

In some implementations, the communication device 1800 further includes a second sending unit. The second sending unit is configured to send feedback information of the first signal to the transmitter, where the feedback information is used for updating a parameter of a first model deployed on the transmitter, the first model is used for performing a predistortion operation.

In some implementations, the feedback information is backward gradient information.

In some implementations, the feedback information is determined based on a difference between a first raw bit and a second raw bit, the first raw bit is used for generating the first signal, and the second raw bit is a raw bit recovered based on the first signal.

In an optional embodiment, the sending unit 1610 may be a transceiver 1930. The communication device 1600 may further include a processor 1910 and a memory 1920, as specifically shown in FIG. 19.

In an optional embodiment, the receiving unit 1720 and the sending unit 1720 may be the transceiver 1930. The communication device 1900 may further include a processor 1910 and a memory 1920, as specifically shown in FIG. 19.

In an optional embodiment, the receiving unit 1810 may be the transceiver 1930, and the processing unit 1820 may be the processor 1910. The communication device 1900 may further include a memory 1920, as specifically shown in FIG. 19.

FIG. 19 is a schematic structural diagram of a communication device according to an embodiment of the present disclosure. The dashed line in FIG. 19 indicates that the unit or model is optional. The device 1900 may be used for implementing the method described in the aforementioned method embodiments. The device 1900 may be a chip, a terminal device, or a network device.

The device 1900 may include one or more processors 1910. The processor 1910 may support the device 1900 to implement the methods described in the aforementioned method embodiments. The processor 1910 may be a general-purpose processor or a special-purpose processor. For example, the processor may be a Central Processing Unit (CPU). Alternatively, the processor may also be another general purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, any conventional processor, or the like.

The device 1900 may further include one or more memories 1920. The memory 1920 has stored a program that is executable by the processor 1910 to cause the processor 1910 to perform each of the methods described in the aforementioned method embodiments. The memory 1920 may be independent of the processor 1910, or may be integrated into the processor 1910.

The device 1900 may further include a transceiver 1930. The processor 1910 may communicate with other devices or chips through the transceiver 1930. For example, through the transceiver 1930, the processor 1910 may send data to other devices or chips, and receive data from other devices or chips.

An embodiment of the present disclosure further provides a computer-readable storage medium configured to store a program. The computer-readable storage medium may be applied to the terminal or the network device in the embodiments of the present disclosure, and the computer program causes a computer to perform each of the methods performed by the terminal or the network device in various embodiments of the present disclosure

An embodiment of the present disclosure further provides a computer program product. The computer program product includes a computer program The computer program product may be applied to the terminal or network device in the embodiments of the present disclosure, and the computer program causes a computer to perform each of the methods performed by the terminal or network device in various embodiments of the present disclosure.

An embodiment of the present disclosure further provides a computer program. The computer program may be applied to the terminal or network device in the embodiments of the present disclosure, and the computer program causes a computer to perform each of the methods performed by the terminal or network device in various embodiments of the present disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used for distinguishing different objects and are not used for describing a particular sequence. Furthermore, the terms "including" and "having" and any variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the "predefined" or "preconfigured" may be achieved by pre-storing corresponding codes, tables or other means used for indicating relevant information in devices (e.g., including terminal devices and network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
   transmitting, by a transmitter, a first signal, wherein the first signal is obtained based on processing by a first model on the transmitter, and the first model is used for performing a predistortion operation on the first signal.

2. The method of claim 1, wherein a parameter of the first model is updated based on the first signal.

3. The method of claim 2, wherein the parameter of the first model is updated based on a difference between the first signal and an input signal of the first model.

4. The method of claim 1, further comprising:
   receiving, by the transmitter, feedback information of the first signal from a receiver, wherein the feedback information is used for updating a parameter of the first model.

5. The method of claim 4, wherein the feedback information is backward gradient information.

6. The method of claim 4 or 5, wherein the feedback information is determined based on a difference between a first raw bit and a second raw bit, the first raw bit being used for generating the first signal, and the second raw bit being a raw bit recovered by the receiver based on the first signal.

7. The method of claim 6, further comprising: before transmitting, by the transmitter, the first signal,

   sending, by the transmitter, the first raw bit to the receiver; or
   receiving, by the transmitter, the first raw bit from the receiver.

8. The method of claim 6, wherein the first raw bit used for determining the feedback information is determined based on predefined information in protocols.

9. The method of any one of claims 4 to 8, wherein the feedback information comprises feedback information of a plurality of receivers.

10. The method of any one of claims 1 to 9, wherein a parameter of the first model is updated based on first power constraint information, and the first power constraint information comprises one or more of:

> power constraint information of the first signal; and
> power constraint information of an output signal of the first model.

11. The method of claim 10, wherein the first power constraint information is used for limiting one or more of:

> an average power of the first signal;
> a total power of the first signal;
> an average power of the output signal of the first model; and
> a total power of the output signal of the first model.

12. The method of any one of claims 1 to 11, wherein an input signal of the first model is one of:

> a channel-encoded bitstream;
> a constellation symbol; and
> a modulated time-domain symbol.

13. The method of any one of claims 1 to 12, wherein the first model corresponds to one antenna port of the transmitter; or the first model corresponds to a plurality of antenna ports of the transmitter.

14. A method for wireless communication, comprising:

> receiving, by a receiver, a first signal from a transmitter; and
> sending, by the receiver, feedback information of the first signal to the transmitter,
> wherein the feedback information is used for updating a parameter of a first model deployed on the transmitter, the first model being used for performing a predistortion operation on the first signal.

15. The method of claim 14, wherein the feedback information is backward gradient information.

16. The method of claim 14 or 15, wherein the feedback information is determined based on a difference between a first raw bit and a second raw bit, the first raw bit being used for generating the first signal, and the second raw bit being a raw bit recovered by the receiver based on the first signal.

17. The method of claim 16, further comprising: before receiving, by the receiver, the first signal from the transmitter,

> receiving, by the receiver, the first raw bit from the transmitter; or
> sending, by the receiver, the first raw bit to the transmitter.

18. The method of claim 16, wherein the first raw bit used for determining the feedback information is determined based on predefined information in protocols.

19. A method for wireless communication, comprising:

> receiving, by a receiver, a first signal from a transmitter; and
> processing, by the receiver, the first signal based on a second model, wherein the second model is used for compensating for a nonlinear distortion of a power amplifier on the transmitter.

20. The method of claim 19, wherein a parameter of the second model is updated based on a difference between a first raw bit and a second raw bit, the first raw bit being used for generating the first signal, and the second raw bit being a raw bit recovered by the receiver based on the first signal.

21. The method of claim 20, further comprising: before receiving, by the receiver, the first signal from the transmitter,

> receiving, by the receiver, a first raw bit from the transmitter; or
> sending, by the receiver, the first raw bit to the transmitter.

22. The method of claim 20, wherein the first raw bit used for updating the parameter of the second model is determined based on predefined information in protocols.

23. The method of any one of claims 19 to 22, wherein the first signal comprises transmit signals of a plurality of receivers.

24. The method of any one of claims 19 to 23, wherein a format of an input signal of the second model is the same as a format of an output signal of the second model.

25. The method of any one of claims 19 to 24, further comprising:

    sending, by the receiver, feedback information of the first signal to the transmitter,
    wherein the feedback information is used for updating a parameter of a first model deployed on the transmitter, the first model being used for performing a predistortion operation.

26. The method of claim 25, wherein the feedback information is backward gradient information.

27. The method of claim 25 or 26, wherein the feedback information is determined based on a difference between a first raw bit and a second raw bit, the first raw bit being used for generating the first signal, and the second raw bit being a raw bit recovered by the receiver based on the first signal.

28. A communication device, wherein the communication device is a transmitter and comprises:
    a sending unit, configured to transmit a first signal, wherein the first signal is obtained based on processing by a first model on the transmitter, and the first model is used for performing a predistortion operation on the first signal.

29. The communication device of claim 28, wherein a parameter of the first model is updated based on the first signal.

30. The communication device of claim 29, wherein the parameter of the first model is updated based on a difference between the first signal and an input signal of the first model.

31. The communication device of claim 28, further comprising:
    a first receiving unit, configured to receive feedback information of the first signal from a receiver, wherein the feedback information is used for updating a parameter of the first model.

32. The communication device of claim 31, wherein the feedback information is backward gradient information.

33. The communication device of claim 31 or 32, wherein the feedback information is determined based on a difference between a first raw bit and a second raw bit, the first raw bit being used for generating the first signal, and the second raw bit being a raw bit recovered based on the first signal.

34. The communication device of claim 33, the sending unit is further configured to send the first raw bit to the receiver; or a receiving unit, configured to receive the first raw bit from the receiver.

35. The communication device of claim 33, wherein the first raw bit used for determining the feedback information is determined based on predefined information in protocols.

36. The communication device of any one of claims 31 to 35, wherein the feedback information comprises feedback information of a plurality of receivers.

37. The communication device of any one of claims 28 to 36, wherein a parameter of the first model is updated based on first power constraint information, and the first power constraint information comprises one or more of:

    power constraint information of the first signal; and
    power constraint information of an output signal of the first model.

38. The communication device of claim 37, wherein the first power constraint information is used for limiting one or more of:

    an average power of the first signal;

a total power of the first signal;
an average power of the output signal of the first model; and
a total power of the output signal of the first model.

39. The communication device of any one of claims 28 to 38, wherein an input signal of the first model is one of:

a channel-encoded bitstream;
a constellation symbol; and
a modulated time-domain symbol.

40. The communication device of any one of claims 28 to 39, wherein the first model corresponds to one antenna port of the transmitter; or
the first model corresponds to a plurality of antenna ports of the transmitter.

41. A communication device, wherein the communication device is a receiver and comprises:

a receiving unit, configured to receive a first signal from a transmitter; and
a sending unit, configured to send feedback information of the first signal to the transmitter,
wherein the feedback information is used for updating a parameter of a first model deployed on the transmitter, the first model being used for performing a predistortion operation on the first signal.

42. The communication device of claim 41, wherein the feedback information is backward gradient information.

43. The communication device of claim 41 or 42, wherein the feedback information is determined based on a difference between a first raw bit and a second raw bit, the first raw bit being used for generating the first signal, and the second raw bit being a raw bit recovered based on the first signal.

44. The communication device of claim 43, wherein the receiving unit is configured to receive the first raw bit from the transmitter; or
the sending unit is configured to send the first raw bit to the transmitter.

45. The communication device of claim 43, wherein the first raw bit used for determining the feedback information is determined based on predefined information in protocols.

46. A communication device, wherein the communication device is a receiver and comprises:

a receiving unit, configured to receive a first signal from a transmitter; and
a processing unit, configured to process the first signal based on a second model, wherein the second model is used for compensating for a nonlinear distortion of a power amplifier on the transmitter.

47. The method of claim 46, wherein a parameter of the second model is updated based on a difference between a first raw bit and a second raw bit, the first raw bit being used for generating the first signal, and the second raw bit being a raw bit recovered based on the first signal.

48. The communication device of claim 47, wherein the receiving unit is configured to receive the first raw bit from the transmitter; or
the sending unit is configured to send the first raw bit to the transmitter.

49. The communication device of claim 47, wherein the first raw bit used for updating the parameter of the second model is determined based on predefined information in protocols.

50. The communication device of any one of claims 46 to 49, wherein the first signal comprises transmit signals of a plurality of receivers.

51. The communication device of any one of claims 46 to 50, wherein a format of an input signal of the second model is the same as a format of an output signal of the second model.

52. The communication device of any one of claims 46 to 51, further comprising:

a second sending unit, configured to send feedback information of the first signal to the transmitter, wherein the feedback information is used for updating a parameter of a first model deployed on the transmitter, the first model being used for performing a predistortion operation.

53. The communication device of claim 52, wherein the feedback information is backward gradient information.

54. The communication device of claim 52 or 53, wherein the feedback information is determined based on a difference between a first raw bit and a second raw bit, the first raw bit being used for generating the first signal, and the second raw bit being a raw bit recovered based on the first signal.

55. A communication device comprising a transceiver, a memory and a processor, wherein the memory is configured to store a program, and the processor is configured to invoke the program in the memory and control the transceiver to receive or send signals, to enable the communication device to perform the method of any one of claims 1-27.

56. A device comprising a processor configured to invoke a program from a memory to enable the device to perform the method of any one of claims 1-27.

57. A chip comprising: a processor configured to invoke a computer program from a memory, to enable a device on which the chip is mounted to perform the method of any one of claims 1-27.

58. A computer-readable storage medium configured to store a computer program, wherein the computer program causes a computer to perform the method of any one of claims 1-27.

59. A computer program product, comprising programs, wherein the programs cause a computer to perform the method of any one of claims 1-27.

60. A computer program, wherein the computer program causes a computer to perform the method of any one of claims 1-27.

**FIG. 1**

**FIG. 2**

Input layer 310

Output layer 330

Hidden layer 320

**FIG. 3**

Input layer 410 | Convolutional layer 420 | Pooling layer 430 | Convolutional layer 420 | Pooling layer 430 | Fully connected layer 440 | Output layer 450

**FIG. 4**

→ Representing vector transmission

○ Representing processing node

σ Representing neural network layer

⤵ Representing vector connection

⤷ Representing vector replication

**FIG. 5**

**FIG. 6**

Transmitter | Receiver

S710, First signal

**FIG. 7**

Transmitter
800

First input signal → First model 810 → First output signal → Power amplifier 820 → First signal

**FIG. 8**

Network device | Terminal device

S910, Dataset for training the first model

S920, Forward propagation process

S930 — Calculating a loss function based on the first signal

S940 — Calculating backward gradient information based on the output value of the loss function

S950, Backward gradient information

S960 — Updating the model parameter of the first model based on the backward gradient information

**FIG. 9**

Terminal device                                                                 Network device

S1010, Dataset for training the first model

S1020, Forward propagation process

S1030 — Calculating a loss function based on the first signal

S1040 — Calculating backward gradient information based on the output value of the loss function

S1050, Backward gradient information

S1060

Updating the model parameter of the first model based on the backward gradient information

**FIG. 10**

Receiver 1100

Second model 1110 → Output signal → Processing module 1120 → Recovered raw bit

**FIG. 11**

Network device                                                                 Terminal device

S1210, Dataset for training the second model

S1220, Forward propagation process

S1230 — Calculating a loss function based on the first signal

S1240 — Updating the model parameter of the second model based on the loss function

**FIG. 12**

| Terminal device | | Network device |
|---|---|---|

S1310, Dataset for training the second model

S1320, Forward propagation process

S1330 — Calculating a loss function based on the first signal

S1340 — Updating the model parameter of the second model based on the loss function

**FIG. 13**

| Network device | | Terminal device |
|---|---|---|

S1410, Dataset for training the first model and the second model

S1420, Forward propagation process

S1430 — Calculating a loss function based on a first raw bit and a second raw bit of the first signal

S1440 — Calculating backward gradient information based on the output value of the loss function

S1450, Backward gradient information

S1460 — Updating the model parameter of the first model based on the backward gradient information

S1470 — Updating the model parameter of the second model based on the backward gradient information

**FIG. 14**

| Terminal device | | Network device |
|---|---|---|

S1510, Dataset for training the first model and the second model

S1520, Forward propagation process

S1530 — Calculating a loss function based on a first raw bit and a second raw bit of the first signal

S1540 — Calculating backward gradient information based on the output value of the loss function

S1550, Backward gradient information

Updating the model parameter of the first model based on the backward gradient information ⟋S1560

S1570 — Updating the model parameter of the second model based on the backward gradient information

**FIG. 15**

| Communication device 1600 |
|---|
| Sending unit 1610 |

**FIG. 16**

| Communication device 1700 |
|---|
| Receiving unit 1710 |
| Sending unit 1720 |

**FIG. 17**

Communication device 1800

Receiving unit 1810

Processing unit 1820

**FIG. 18**

Device 1900

Processor 1910

Memory 1920

Transceiver 1930

**FIG. 19**

## INTERNATIONAL SEARCH REPORT

| | International application No. |
|---|---|
| | **PCT/CN2023/110855** |

**A. CLASSIFICATION OF SUBJECT MATTER**

H04L 25/49(2006.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CJFD, CNTXT, ENTXTC, DWPI, IEEE: 发射, 发送, 接收, 端, 侧, 机, 器, 初始, 原始, 比特, 信号, 差, 反馈, 反向传播, 反向传播算法, 梯度, 预失真, 参数, 系数, 更新, 调, 调节, 调整, 模型, 反馈, 学习, 训练, transmit+, receiv+, initial, bit, signal, difference, feedback, back-propagation, backpropagation, gradient, pre-distortion, DPD, parameter?, coefficient?, update, adjust, model, feedback, learning, training

**C. DOCUMENTS CONSIDERED TO BE RELEVANT**

| Category* | Citation of document, with indication, where appropriate, of the relevant passages | Relevant to claim No. |
|---|---|---|
| X | WO 2022268134 A1 (HUAWEI TECHNOLOGIES CO., LTD.) 29 December 2022 (2022-12-29)<br>    description, paragraphs 0226-0292 | 1-60 |
| A | CN 103856423 A (HUAWEI TECHNOLOGIES CO., LTD.) 11 June 2014 (2014-06-11)<br>    entire document | 1-60 |
| A | CN 106911624 A (BEIJING RINFON TECHNOLOGY CO., LTD.) 30 June 2017 (2017-06-30)<br>    entire document | 1-60 |
| A | CN 110414565 A (BEIJING UNIVERSITY OF POSTS AND TELECOMMUNICATIONS et al.) 05 November 2019 (2019-11-05)<br>    entire document | 1-60 |
| A | US 2021391832 A1 (NOKIA TECHNOLOGIES OY) 16 December 2021 (2021-12-16)<br>    entire document | 1-60 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2024** | **11 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/110855** |

| Patent document cited in search report | | | Publication date (day/month/year) | Patent family member(s) | | | Publication date (day/month/year) |
| --- | --- | --- | --- | --- | --- | --- | --- |
| WO | 2022268134 | A1 | 29 December 2022 | CN | 115529211 | A | 27 December 2022 |
| CN | 103856423 | A | 11 June 2014 | | None | | |
| CN | 106911624 | A | 30 June 2017 | | None | | |
| CN | 110414565 | A | 05 November 2019 | | None | | |
| US | 2021391832 | A1 | 16 December 2021 | EP | 3923471 | A1 | 15 December 2021 |
| | | | | CN | 113809992 | A | 17 December 2021 |

Form PCT/ISA/210 (patent family annex) (July 2022)